# FASCICULE DE BREVET EUROPEEN

(11) **EP 3 577 348 B1**
(45) Date de publication et mention de la délivrance du brevet: **01.03.2023**
(21) Numéro de dépôt: 18702266.0
(22) Date de dépôt: 29.01.2018
(51) Int. Cl.: F16B 2/08

(54) **DISPOSITIF DE MAINTIEN D'UNE PIECE SUR UN SUPPORT**
VORRICHTUNG ZUM HALTEN EINES TEILS AUF EINER UNTERLAGE
DEVICE FOR RETAINING A PART ON A SUPPORT

(30) Priorité: 01.02.2017 FR 1750844
(43) Date de publication de la demande: 11.12.2019
(73) Titulaire: Renault s.a.s, 92100 Boulogne Billancourt (FR)
(72) Inventeur: DUPREZ, Didier, 78170 La Celle Saint Cloud (FR); VILLENEUVE, Arnaud, 78540 Vernouillet (FR)
(74) Mandataire: Renault Group
(86) Numéro de dépôt international: PCT/EP2018/052142
(87) Numéro de publication internationale: WO 2018/141690

(56) Documents cités:
- DE-A1-102010 036 684
- US-A- 5 004 081
- US-A- 5 513 721

## Description

La présente invention se rapporte, de manière générale, à un dispositif de maintien d'une pièce sur un support.

Généralement, on peut, par exemple, prévoir de maintenir une pièce au moyen d'une sangle, d'une bride ou encore par vissage.

Dans un véhicule automobile, il peut être nécessaire de maintenir certaines pièces présentant un facteur de forme faible, le facteur de forme étant défini par la largeur de la pièce sur la hauteur de la pièce, et présentant également un centre de gravité relativement haut.

Lorsque la pièce à maintenir correspond, par exemple, à un chargeur de véhicule électrique ou hybride, le dispositif de maintien doit assurer la stabilité du chargeur, confronté à des contraintes vibratoires sévères.

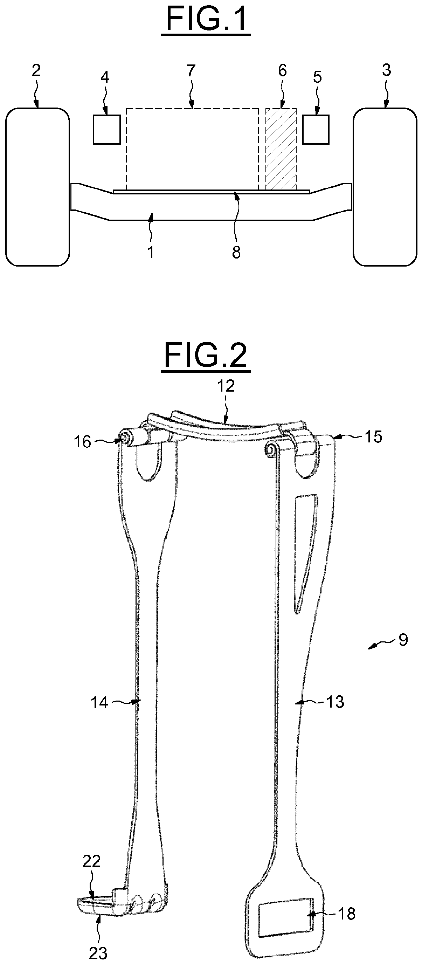

La figure 1 illustre le train arrière d'un véhicule automobile électrique. Un berceau 1 s'étend entre deux roues 2 et 3. Deux longerons 4 et 5 s'étendent latéralement et délimitent un espace 6 dédié à un chargeur ainsi qu'un espace 7 dédié à d'autres pièces destinées au fonctionnement du véhicule. Le chargeur est disposé sur un support 8, entre le longeron 5 et le volume réservé 7.

Une solution de fixation robuste d'un chargeur de véhicule sur un support consiste à ajouter de la matière de part et d'autre de la pièce de manière à introduire deux surfaces planes que l'on vient fixer au support par l'intermédiaire d'une ou plusieurs vis.

Cependant, il n'est pas toujours possible d'adapter la pièce de cette façon.

De plus, le volume requis pour un tel dispositif de maintien n'est pas toujours disponible autour du chargeur 6, et l'accès au chargeur, très limité et unilatéral, ne permet pas de dévisser le dispositif pour son démontage et de le revisser pour son montage ultérieur.

Une solution supplémentaire consiste à maintenir la pièce aux moyens d'une sangle entourant la pièce et fixée au support.

Toutefois, l'absence de rigidité de la sangle ne permet pas de maintenir la pièce de manière stable de sorte que cette solution n'est pas adaptée aux pièces hautes et de base étroite.

Le document DE 10 2010 036 684 divulgue un dispositif de fixation pour une batterie dans un véhicule comportant un support destiné à transporter la batterie. Une sangle de serrage entoure la batterie et est fixée au support ainsi qu'à un dispositif de serrage.

La présente invention concerne un dispositif de maintien rigide et compact d'une pièce sur un support, adapté aux contraintes d'encombrement environnant la pièce à maintenir et assurant la stabilité de la pièce, et plus particulièrement adapté aux pièces possédant un facteur de forme faible.

Il est donc proposé un dispositif de maintien destiné à maintenir une pièce sur un support, comprenant une bride destinée à être disposée au contact d'une première face de la pièce à maintenir, la première face étant opposée à une deuxième face de la pièce qui est disposée au contact du support, un dispositif de fixation de la bride sur le support et un dispositif de mise en tension de la bride.

En outre, la bride comprend un élément élastiquement déformable destiné à exercer une pression sur la première face de la pièce lorsque la bride est mise sous tension par le dispositif de mise en tension.

Selon l'invention, l'élément élastiquement déformable est formé par une lame ressort.

Avantageusement, la bride est fixée de manière amovible au support.

On pourra prévoir que l'ensemble formé par l'élément élastiquement déformable et les tirants forme une sangle, facilement adaptable à la géométrie de la pièce à maintenir.

De manière avantageuse, le dispositif de mise en tension de la bride comprend un ensemble formé par une vis et un écrou configuré pour maintenir la bride dans un état étiré.

Selon un mode de réalisation de l'invention, le dispositif de fixation comprend un crochet pourvu sur le support configuré pour coopérer avec une ouverture pourvue sur la sangle.

Selon l'invention, le dispositif de maintien comprend deux tirants montés à pivotement sur l'élément élastiquement déformable, le dispositif de fixation est configuré pour fixer l'extrémité libre d'un premier tirant au support et le dispositif de mise en tension est configuré pour fixer l'extrémité libre du deuxième tirant au support, chaque tirant étant destiné à être disposé le long d'une face latérale de la pièce.

Selon une caractéristique de l'invention, le dispositif de maintien peut comprendre un dispositif de positionnement comportant un ergot disposé sur la deuxième face de la pièce à maintenir, l'ergot étant destiné à être inséré dans une encoche prévue sur le support. Un tel dispositif stabilise la pièce sur son support et l'empêche de se déplacer dans un plan horizontal.

Ce dispositif peut s'appliquer avantageusement à tout autre organe d'électronique de puissance embarqué sur un véhicule (onduleur, convertisseur DCDC, Step-Up converter, etc).

L'invention concerne également un véhicule automobile comprenant une pièce maintenue sur un support du véhicule, caractérisé en ce que la pièce est maintenue sur le support au moyen d'un dispositif de maintien tel que décrit ci-dessus.

D'autres buts, avantages et caractéristiques ressortiront de la description qui va suivre, donnée à titre d'exemple purement illustratif et faite en référence aux dessins annexés sur lesquels :
- La figure 1 est une vue de face d'un train de véhicule automobile électrique comprenant un chargeur ;
- La figure 2 est une vue en perspective d'une bride d'un dispositif de maintien selon un mode de réalisation de l'invention ;
- La figure 3 représente une vue de face d'un chargeur selon la figure 1, dans une première étape de son montage sur le support au moyen de la bride du dispositif de maintien selon le mode de réalisation de l'invention illustrée à la figure 2 ;
- La figure 4 est une vue de face du chargeur de la figure 3 dans une deuxième étape de son montage sur le support ; et
- La figure 5 est une vue de face du chargeur de la figure 3 dans une troisième étape de son montage sur le support.

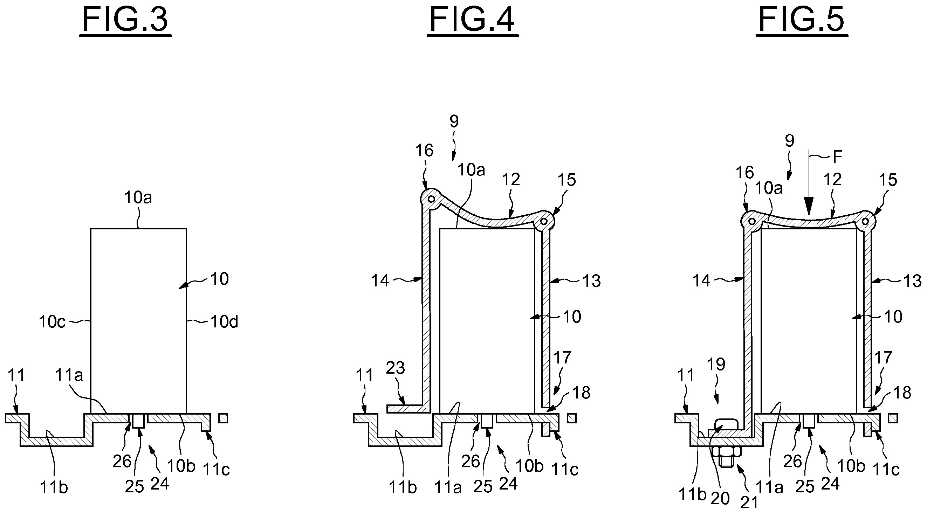

Les figures 4 et 5 illustrent un dispositif de maintien, conforme à l'invention, destiné à maintenir une pièce sur un support.

Dans l'exemple illustré, la pièce correspond à un chargeur 10 de véhicule automobile électrique, maintenu sur un support 11 du véhicule et visible aux figures 3 à 5.

Le chargeur illustré 10 comprend une première face supérieure 10a, une deuxième face inférieure 10b opposée à la face 10a et au moins deux faces latérales opposées 10c et 10d.

De préférence, le support 11 est pourvu d'un renfoncement tel que sa surface principale 11a est surélevée par rapport à une surface 11b disposée au creux du renfoncement.

Le dispositif de maintien comprend une bride 9 représentée à titre d'exemple à la figure 2. La bride 9 comprend un élément élastiquement déformable 12. Dans cet exemple, l'élément élastiquement déformable est une lame ressort 12 possédant un profil en U ainsi qu'une section et un rayon de courbure constants.

En outre, la bride 9 comprend, de préférence, deux tirants 13 et 14 montés à pivotement sur la lame ressort 12 à l'une de ses extrémités, au moyen de deux pivots, respectivement, 15 et 16. La lame ressort 12 et les deux tirants 13, 14 forment avantageusement une sangle.

Dans l'exemple illustré, les tirants 13, 14 sont réalisés en feuille d'acier pliée et la lame ressort 12 est estampée en acier haute limite élastique. Les pivots 15, 16 peuvent, quant à eux, être réalisés avec des goupilles élastiques, maintenues par le pliage des feuilles d'acier.

Le dispositif de maintien comprend un dispositif de fixation 17 de la bride 9 sur le support 11. De préférence, le dispositif de fixation 17 est choisi de sorte que la bride 9 reste amovible par rapport au support 11 et choisi de sorte que la bride 9 et le support 11 peuvent être assemblés et séparés, manuellement et facilement sans outil, dans un espace environnant la pièce à maintenir réduit. Dans l'exemple illustré, le dispositif de fixation 17 est formé par une ouverture 18 pourvue à l'extrémité libre du tirant 13 destinée à coopérer avec un crochet 11c pourvu sur le support 11.

De plus, le dispositif de maintien comprend un dispositif de mise en tension 19 de la sangle. De préférence, le dispositif de mise en tension 19 est choisi de manière à assurer une fixation robuste de la sangle sur le support 11 mais est également choisi de sorte que la bride 9 reste amovible par rapport au support 11. Comme représenté sur la figure 5, le dispositif de mise en tension 19 peut être formé par un ensemble vis et écrou.

L'extrémité du tirant 14 peut être avantageusement courbée de manière à ce que la vis soit insérée au travers d'une ouverture 22 pourvue sur une portion recourbée 23 destinée à être plaquée contre le support 11 après vissage.

Avantageusement, le dispositif de maintien comprend un dispositif de positionnement 24 de la pièce 10 sur le support 11. Dans l'exemple représenté aux figures 3 à 6, un ergot 25 est pourvu sur la face inférieure 10b du chargeur 10. L'ergot 25 est configuré pour venir s'insérer dans une encoche 26 prévue dans le support 11.

Les figures 3 à 5 illustrent les différentes étapes de montage du dispositif de maintien du chargeur 10 sur le support 11.

A la figure 3, on peut voir que, dans une première étape, le chargeur 10 est positionné sur le support 11, la face inférieure 10b étant au contact du support 11. L'ergot 25 est disposé dans l'encoche 26 de sorte que le chargeur 10 n'est plus libre de mouvement dans un plan horizontal.

Dans une deuxième étape illustrée à la figure 4, le tirant 13 de la bride 9 est fixé au support 11. Le crochet pourvu sur le support 11 est inséré dans l'ouverture 18 du tirant 13. La lame ressort 12 est posée contre la face supérieure 10a du chargeur 10 et la portion 23 de l'extrémité libre du deuxième tirant 14 s'étend sensiblement dans le même plan que la surface principale 11a du support 11. Le tirant 13 s'étend le long de la face latérale 10d du chargeur 10.

Dans une dernière étape de montage illustrée à la figure 5, la portion 23 de l'extrémité libre du tirant 14 est plaquée et fixée contre la surface 11b du support 11 par l'intermédiaire de l'ensemble vis 20 et écrou 21. L'ensemble de la bride 9 est maintenue sous tension par le dispositif de mise en tension 19 et plus précisément, les tirants 13 et 14 sont maintenus dans un état étiré par rapport à un état de repos lorsque le tirant 14 n'est pas fixé au support 11, illustré à la figure 4. Le tirant 14 s'étend le long de la face latérale 10c du chargeur 10 et les deux pivots 15 et 16 se retrouvent sensiblement à la même hauteur. Dans une telle position, la lame ressort 12 est déformée par la mise en tension de la bride 9 et génère un effort presseur F sur la face supérieure du chargeur 10, ce qui a pour effet de stabiliser et maintenir de façon robuste le chargeur 10 sur le support 11.

La valeur de l'effort presseur est indépendante de la force exercée pour mettre la bride 9 en tension. L'effort dépend de la course à rattraper pour que la portion 23 soit plaquée et vissée sur la surface 11b du support 11. Aussi, un tel dispositif de maintien offre la possibilité de choisir l'endroit où est appliqué l'effort presseur F.

Le dispositif de mise en tension 19 est avantageusement disposé en contrebas de la surface principale 11a de sorte que le volume réservé à d'autres pièces du véhicule n'est pas réduit.

On pourra prévoir que la lame ressort 12 ait un profil différent, par exemple, un profil plat ou en W. La lame ressort 12 pourra aussi posséder un rayon de courbure et une section variables. Ces différentes caractéristiques pourront être choisies en fonction du profil de la pièce à maintenir et de manière à maîtriser l'effort presseur F.

Par ailleurs, la forme et la longueur des tirants pourront être adaptées aux contraintes d'architecture du système et à l'effort presseur que l'on souhaite exercer sur la pièce 10. De même que leur nombre pourra être différent de deux selon la forme et le volume de la pièce à maintenir.

Il sera également possible de prévoir plusieurs brides selon le volume de la pièce 10 à maintenir.

Dans un autre de mode de réalisation, l'effort presseur exercé sur la pièce pourra être configuré pour être maximal de sorte que le dispositif de maintien soit fusible, lors d'un crash par exemple.

En alternative, on pourra prévoir que le dispositif de fixation corresponde à un dispositif de type attache sauterelle.

Bien entendu, on pourra prévoir un tel dispositif de maintien, particulièrement avantageux pour maintenir des pièces dont le facteur de forme est faible et dont le centre de gravité est élevé, dans un autre système qu'un véhicule automobile.

## Revendications

1. Ensemble pièce et dispositif de maintien de ladite pièce (10) sur un support (11), comprenant une bride (9) disposée au contact d'une première face (10a) de la pièce (10), la première face (10a) étant opposée à une deuxième face (10b) de la pièce (10) destinée à être disposée au contact du support (11), un dispositif de fixation (17) de la bride (9) apte à fixer ladite bride sur le support (11) et un dispositif de mise en tension (19) de la bride (9), la bride (9) comprenant un élément élastiquement déformable (12), dans lequel ledit élément élastiquement déformable est une lame ressort posée contre ladite première face et destinée à exercer une pression sur la première face (10a) de la pièce (10) lorsque la bride (9) est mise sous tension par le dispositif de mise en tension (19), **caractérisé en ce que** ladite bride comprenant deux tirants (13, 14) montés à pivotement sur l'élément élastiquement déformable (12), le dispositif de fixation (17) étant configuré pour fixer l'extrémité libre d'un premier tirant (13) au support (11) et le dispositif de mise en tension (19) étant configuré pour fixer l'extrémité libre du deuxième tirant (14) au support (11), chaque tirant (13, 14) étant destiné à être disposé le long d'une face latérale de la pièce (10).

2. Ensemble selon la revendication 1, **caractérisé en ce que** la bride (9) est apte à être fixée de manière amovible au support (11).

3. Ensemble selon la revendication 1 ou 2, **caractérisé en ce que** l'ensemble formé par l'élément élastiquement déformable (12) et les tirants (13, 14) forme une sangle.

4. Ensemble selon l'une quelconque des revendications précédentes, **caractérisé en ce que** le dispositif de fixation (17) comprend une ouverture (18) pourvue sur la sangle et configurée pour coopérer avec un crochet (11c) pourvu sur le support (11).

5. Ensemble selon l'une quelconque des revendications précédentes, **caractérisé en ce que** le dispositif de mise en tension (19) de la bride (9) comprend un ensemble formé par une vis (20) et un écrou (21) configuré pour maintenir la bride (9) dans un état étiré.

6. Ensemble selon l'une quelconque des revendications précédentes, **caractérisé en ce qu'**il comprend un dispositif de positionnement comportant un ergot (25) disposé sur la deuxième face (10b) de la pièce (10) à maintenir, l'ergot (25) étant destiné à être inséré dans une encoche (26) prévue sur le support (11).

7. Véhicule automobile comprenant un ensemble pièce et dispositif de maintien de ladite pièce (10) selon l'une quelconque des revendications 1 à 6, **caractérisé en ce que** la pièce (10) est maintenue sur un support (11) du véhicule.

## Patentansprüche

1. Anordnung aus einem Teil und einer Vorrichtung zum Halten des Teils (10) auf einer Halterung (11), umfassend einen Bügel (9), der in Kontakt mit einer ersten Seite (10a) des Teils (10) angeordnet ist, wobei die erste Seite (10a) einer zweiten Seite (10b) des Teils (10) gegenüberliegt, die dazu bestimmt ist, in Kontakt mit der Halterung (11) angeordnet zu sein, eine Vorrichtung zur Befestigung (17) des Bügels (9), die geeignet ist, den Bügel auf der Halterung (11) zu befestigen, und eine Vorrichtung zum Spannen (19) des Bügels (9), wobei der Bügel (9) ein elastisch verformbares Element (12) umfasst, wobei das elastisch verformbare Element ein Federblatt ist, das an der ersten Seite anliegt und dazu bestimmt ist, einen Druck auf die erste Seite (10a) des Teils (10) auszuüben, wenn der Bügel (9) durch die Spannvorrichtung (19) gespannt wird, **dadurch gekennzeichnet, dass** der Bügel zwei Zugelemente (13, 14) umfasst, die schwenkbar an dem elastisch verformbaren Element (12) gelagert sind, wobei die Befestigungsvorrichtung (17) dazu ausgebildet ist, das freie Ende eines ersten Zugelements (13) an der Halterung (11) zu befestigen und die Spannvorrichtung (19) dazu ausgebildet ist, das freie Ende des zweiten Zugelements (14) an der Halterung (11) zu befestigen, wobei jedes Zugelement (13, 14) dazu bestimmt ist, entlang einer Seitenfläche des Teils (10) angeordnet zu sein.

2. Anordnung nach Anspruch 1, **dadurch gekennzeichnet, dass** der Bügel (9) geeignet ist, abnehmbar an der Halterung (11) befestigt zu sein.

3. Anordnung nach Anspruch 1 oder 2, **dadurch gekennzeichnet, dass** die Anordnung, die vom elastisch verformbaren Element (12) und den Zugelementen (13, 14) gebildet wird, einen Gurt bildet.

4. Anordnung nach einem der vorhergehenden Ansprüche, **dadurch gekennzeichnet, dass** die Befestigungsvorrichtung (17) eine Öffnung (18) umfasst, die an dem Gurt vorgesehen ist und dazu ausgebildet ist, mit einem Haken (11c) zusammenzuwirken, der auf der Halterung (11) vorgesehen ist.

5. Anordnung nach einem der vorhergehenden Ansprüche, **dadurch gekennzeichnet, dass** die Vorrichtung zum Spannen (19) des Bügels (9) eine Anordnung umfasst, die von einer Schraube (20) und einer Mutter (21) gebildet ist, die dazu ausgebildet ist, den Bügel (9) in einem gezogenen Zustand zu halten.

6. Anordnung nach einem der vorhergehenden Ansprüche, **dadurch gekennzeichnet, dass** sie eine Positionierungsvorrichtung umfasst, die eine Nase (25) aufweist, die auf der zweiten Seite (10b) des zu haltenden Teils (10) angeordnet ist, wobei die Nase (25) dazu bestimmt ist, in eine Nut (26) eingeführt zu sein, die auf der Halterung (11) vorgesehen ist.

7. Kraftfahrzeug umfassend eine Anordnung aus einem Teil und einer Vorrichtung zum Halten des Teils (10) nach einem der Ansprüche 1 bis 6, **dadurch gekennzeichnet, dass** das Teil (10) auf einer Halterung (11) des Fahrzeugs gehalten wird.

## Claims

1. Assembly of a part and of a device for retaining said part (10) on a support (11), comprising a clamp (9) arranged in contact with a first face (10a) of the part (10), the first face (10a) being opposite a second face (10b) of the part (10) intended to be placed in contact with the support (11), a clamp (9) fixing device (17) able to fix said clamp to the support (11) and a clamp (9) tensioning device (19), the clamp (9) comprising an elastically deformable element (12), wherein said elastically deformable element is a leaf spring placed against said first face and intended to apply pressure to the first face (10a) of the part (10) when the clamp (9) is tensioned by the tensioning device (19), **characterized in that** said clamp comprises two tie bars (13, 14) pivot-mounted on the elastically deformable element (12), the fixing device (17) being configured to fix the free end of a first tie bar (13) to the support (11) and the tensioning device (19) being configured to fix the free end of the second tie bar (14) to the support (11), each tie bar (13, 14) being intended to be positioned along a lateral face of the part (10).

2. Assembly according to Claim 1, **characterized in that** the clamp (9) is able to be fixed removably to the support (11).

3. Assembly according to Claim 1 or 2, **characterized in that** the assembly formed by the elastically deformable element (12) and the tie bars (13, 14) forms a strap.

4. Assembly according to any one of the preceding claims, **characterized in that** the fixing device (17) comprises an opening (18) provided on the strap and configured to collaborate with a hook (11c) provided on the support (11).

5. Assembly according to any one of the preceding claims, **characterized in that** the clamp (9) tensioning device (19) comprises an assembly formed of a screw (20) and of a nut (21) and configured to keep the clamp (9) in a stretched state.

6. Assembly according to any one of the preceding claims, **characterized in that** it comprises a positioning device comprising a stud (25) positioned on the second face (10b) of the part (10) that is to be retained, the stud (25) being intended to be inserted into a slot (26) made in the support (11).

7. Motor vehicle comprising an assembly of a part and of a device for retaining said part (10) according to any one of Claims 1 to 6, **characterized in that** the part (10) is retained on a support (11) of the vehicle.
